(19) **Europäisches Patentamt**
**European Patent Office**
**Office européen des brevets**

(11) Veröffentlichungsnummer: **0 380 477 B1**

(12) # EUROPÄISCHE PATENTSCHRIFT

(45) Veröffentlichungstag der Patentschrift: **21.10.92**

(51) Int. Cl.5: **F16K 17/04**, F16K 47/00, F16F 9/30

(21) Anmeldenummer: **88903249.6**

(22) Anmeldetag: **22.04.88**

(86) Internationale Anmeldenummer:
**PCT/EP88/00342**

(87) Internationale Veröffentlichungsnummer:
**WO 88/08496 (03.11.88 88/24)**

(54) **FEDERBELASTETES SICHERHEITSVENTIL.**

(30) Priorität: **25.04.87 DE 3713974**

(43) Veröffentlichungstag der Anmeldung:
**08.08.90 Patentblatt 90/32**

(45) Bekanntmachung des Hinweises auf die Patenterteilung:
**21.10.92 Patentblatt 92/43**

(84) Benannte Vertragsstaaten:
**AT BE CH DE FR GB LI**

(56) Entgegenhaltungen:
**EP-A- 0 032 346**
**DE-A- 3 010 520**

(73) Patentinhaber: **Babcock Sempell Aktiengesellschaft**
**Werner-von-Siemens-Strasse**
**W-4052 Korschenbroich(DE)**

(72) Erfinder: **SCHNETTLER, Armin**
**Richard-Strauss-Str. 30**
**W-4048 Grevenbroich(DE)**

(74) Vertreter: **Ostertag, Reinhard et al**
**Patentanwälte Dr. Ulrich Ostertag Dr. Reinhard Ostertag Eibenweg 10**
**W-7000 Stuttgart 70(DE)**

## Beschreibung

Die Erfindung betrifft ein federbelastetes Sicherheitsventil gemäß dem Oberbegriff des Anspruches 1.

Ein solches ist in der EP-A1-0 032 346 beschrieben. Bei ihm ist das bewegliche Teil der mit der Ventilspindel verbundenen Dämpfungseinrichtung ein Kolben. Dieser verdrängt Hydrauliköl über eine Drossel zwischen zwei Zylinderarbeitsräumen, welche er zusammen mit dem ihn aufnehmenden becherfärmigen feststehenden Dämpferteil begrenzt.

Bei dem bekannten Sicherheitsventil läßt sich der Einsetzpunkt der Dämpfung und die Größe der Dämpfung nicht einstellen. Dies wäre aber gerade bei Sicherheitsventilen wünschenswert, bei denen sich die auf die Ventilspindel einwirkenden Kräfte in der Nachbarschaft der Schließstellung sehr rasch mit dem Öffnungsweg ändern.

Ein weiteres federbelastetes Sicherheitsventil ist in der Zeitschrift VGB Kraftwerkstechnik, Heft 8, August 1984, Seiten 746 ff. beschrieben. Bei ihm weist die auf die Spindel arbeitende Dämpfungseinrichtung an der Spindelaußenfläche angreifende Bremsbacken mit kugelförmiger Außenfläche auf, die über kegelförmige Druckstücke durch eine Feder gegen die Spindelaußenfläche vorgespannt sind. Die Dämpfungseinrichtung arbeitet somit nach dem Prinzip der Festkörperreibung, und mit dieser Dämpfungseinrichtung kann man die schädlichen Einwirkungen von Ventilschwingungen zum Teil ausräumen. Derartige Ventilschwingungen entstehen insbesondere durch Rückwirkungen von Druckwellen. Letztere entstehen z.B. bei jeder unstetigen Bewegung der Ventilspindel und dem von ihr getragenen Verschlußstück.

Das System, welches durch das Sicherheitsventil, die zu ihm führende Ventilzuleitung und die von ihm weglaufende Ausblaseleitung gebildet ist, ist zur Selbsterregung von Schwingungen befähigt, wobei die Auslösung durch kleine Störungen erfolgen kann, die in den Leitungen auftreten oder über diese weitergeleitet werden. Die Eigendämpfung dieses Systems ist klein verglichen mit der Energie, welche in dem durch das Sicherheitsventil abzusichernden Strömungsmittel steckt.

Gerät das durch die Leitungen und das Sicherheitsventil gebildete System ins Schwingen, so wirkt das Sicherheitsventil wie ein instabiler Oszillator. Es können bei diesen Schwingungen Druckamplituden in den Leitungen entstehen, welche die Festigkeits- bzw. Auslegegrenze der Leitungen weit überschreiten.

Bei diesem bekannten Sicherheitsventil arbeitet die Dämpfungseinrichtung in einer Weise, welche das Auftreten von Schwingungen begünstigen kann, da bei großen Störungen, durch welche die Haftreibung zwischen Bremsbacken und der Spindelaußenfläche überwunden wird, ein Kraftüberschuß erzeugt wird, der von der verglichen mit der Haftreibung kleineren konstanten Gleitreibung nicht aufgezehrt werden kann. Dieser Kraftüberschuß führt zu einer ruckartigen Bewegung des Verschlußstückes, was wiederum zur Erzeugung von Druckschwingungen im Leitungssystem führt. Man erhält so eine Rückkopplung auf das Sicherheitsventil. Dieser Übergang zwischen Haftreibung und Gleitreibung erfolgt bei jeder Bewegungsumkehr der Ventilspindel. Die Dämpfung ist ferner unabhängig von der Bewegungsgeschwindigkeit der Ventilspindel, so daß bezogen auf einen Schwingungszyklus unabhängig von der effektiven Spindelgeschwindigkeit in etwa ein konstanter Anteil der insgesamt vorliegenden Bewegungsenergie vernichtet wird. Dies bedeutet, daß hohe Frequenzen weniger gut gedämpft werden können.

Auf Grund der vom Dämpfungsprinzip dieses bekannten Sicherheitsventiles vorgegebenen unvermeidlichen Haftreibung wird auch der statische Kräftehaushalt des Sicherheitsventiles je nach der Vorspannung der Bremsbacken beeinflußt. Der Ansprechpunkt des Sicherheitsventiles verschiebt sich in nicht genau kontrollierbarer Weise. Auch müssen die Reibflächen korrosionsgeschützt sein, was zusätzlichen Wartungsaufwand bedeutet. Im Falle einer erzwungenen Schwingung besteht die Gefahr einer mechanischen und/oder thermischen Beschädigung der Ventilspindel.

Es sind ferner schwingungsdämpfende Lagerelemente zum Aufstellen von Maschinen bekannt (vgl. die DE-A1-30 10 520), die im inneren einer Schraubenfeder angeordnet einen Dämpfer aufweisen, dessen gegeneinander bewegliche zylindrische Dämpferteile einander unter kleinem Abstand gegenüberliegende Wirkflächen vorgeben, zwischen welche ein viskoses Medium eingefüllt ist. Dieses wird bei der Relativbewegung der Dämpferteile auf Scherung beansprucht. Bei solchen Lagerelementen ist eine genaue Einstellbarkeit des Einsetzpunktes und der Größe der Dämpfung nicht von Interesse.

Durch die vorliegende Erfindung soll ein Sicherheitsventil gemäß dem Oberbegriff des Anspruches 1 so weitergebildet werden, daß auch hochfrequente Schwingungen der beweglichen Ventilteile, die mit kleiner Amplitude erfolgen, gut gedämpft werden.

Diese Aufgabe ist erfindungsgemäß gelöst durch ein Sicherheitsventil gemäß Anspruch 1.

Bei dem erfindungsgemäßen Sicherheitsventil erfolgt die Dämpfung der Schwingungen der beweglich angeordneten Ventilteile dadurch, daß eine dünne Schicht viskosen Mediums auf Scherung beansprucht wird. Auf Grund der inneren Reibung des viskosen Mediums wird die kinetische Energie (und damit im Laufe der Zeit auch die potentielle Energie) des durch die beweglichen Ventilteile, die auf die Spindel arbeitende Federanordnung, die Leitungsteile und das in diesen befindlichen Strömungsmittel gebildeten schwingungsfähigen Systems vernichtet.

Für die Scherung dünner Schichten vieler viskoser Medien muß keine große Anfangshemmung überwunden werden, so daß die Dämpfung des erfindungsgemäßen Sicherheitsventiles auch schon bei sehr kleinen Amplituden wirksam einsetzt. Soweit dünne Schichten viskoser Medien eine ins Gewicht fallende Anfangshemmung aufweisen (insbesondere thixotrope viskose Medien), schließt sich doch an eine solche Anfangshemmung eine diese übersteigende Scherhemmung an, so daß die Kraft/Wegkurve insgesamt keine abfallenden Abschnitte aufweist, welche die Selbsterregung von Schwingungen begünstigen.

Da es sich bei der Scherbelastung einer Schicht aus viskosem Medium um eins innere Materialbelastung handelt, spielt die Oberflächenqualität der Ventilspindel keine ausschlaggebende Rolle. Selbst dann, wenn die Rauhigkeit der Spindeloberfläche über dem Normalmaß liegt, ist die Arbeitscharakteristik der im erfindungsgemäßen Sicherheitsventil vorgesehenen speziellen Dämpfungseinrichtung unverändert.

Die von der Dämpfungseinrichtung im erfindungsgemäßen Sicherheitsventil von Beginn einer einsetzenden Selbsterregung des schwingungsfähigen Systemes an absorbierte Energie steigt mit der Bewegungsgeschwindigkeit der Ventilspindel, so daß größere Energiemengen rascher dissipiert werden.

Bei dem erfindungsgemäßen Sicherheitsventil ist auch zusätzlicher Wartungsaufwand nicht erforderlich, da die gängigen viskosen Medien die Wirkungsflächen zugleich gut gegen Korrosion schützen. Die Dämpfungseinrichtung ist auch verschleißfrei. Über große Abmessungen aufweisenden Wirkflächen läßt sich auch die bei der Dissipation von Energie gebildete Wärme großflächig abführen, so daß keine Überhitzung der Ventilspindel oder der Dämpferteile erfolgt.

Bei dem erfindungsgemäßen Sicherheitsventil erfolgt das Vernichten der im schwingungsfähigen System steckenden Energie durch Scherung des viskosen Mediums, welches sich zwischen den Wirkflächen befindet. Die entsprechende Scherarbeit ist irreversibel, und man erhält hierdurch makroskopisch eine inelastische Reaktionskraft der Dämpfungseinrichtung auf die Ventilspindel. Ähnlich wie bei der festkörperreibung besitzen manche viskose Medien eine der Haftreibung vergleichbare Eigenschaft: bei kleinen Schergeschwindigkeiten verhält sich das Medium besonders zäh. Mit zunehmender Schergeschwindigkeit steigt die Scherkraft anders als bei der Festkörpergleitreibung jedoch degressiv an und fällt nicht sprungartig ab, wie beim Übergang von der Haftreibung zur Gleitreibung. Die Dämpfungswirkung setzt daher bei dem erfindungsgemäßen Sicherheitsventil kontinuierlich ein und steigert sich degressiv ohne Sprungstellen. Schwingungen mit kleiner Amplitude werden so wirkungsvoll gedämpft, ohne daß der Ansprechdruck des Sicherheitsventiles in relevantem Ausmaße verändert würde.

Anders als bei einer rein mechanisch arbeitenden Dämpfungseinrichtung kann man das Ausmaß der Dämpfung beim erfindungsgemäßen Sicherheitsventil in gut vorherbestimmbarer und vorherberechenbarer Weise abändern, ohne daß der Ansprechdruck des Sicherheitsventiles verändert würde, und zwar über folgende Parameter:

- die Dicke des Spaltes, der zwischen den Wirkflächen der Dämpferteile liegt und mit dem viskosen Medium gefüllt ist;
- die Größe der Überlappungsfläche zwischen der Schicht aus viskosem Medium und den einander gegenüberliegenden Dämpferteilen;
- die Viskosität bzw. Ruhepenetration (DIN 51 804, Blatt 1) des verwendeten viskosen Mediums.

Die koaxiale Anordnung zylindrischer Wirkflächen ist im Hinblick auf eine in Umfangsrichtung gleichbleibende Scherbelastung der Schicht aus viskosem Medium von Vorteil. Darüber hinaus können so die beiden Dämpferteile zusätzlich Führungsaufgaben an dem mit ihnen zusammenarbeitenden Abschnitt der Ventilspindel übernehmen, insbesondere dann, wenn mit geringem Abstand zwischen den Wirkflächen der Dämpferteile gearbeitet wird, wie im Anspruch 12 angegeben, bzw. die Wirkflächen große axiale Abmessung haben, wie im Anspruch 19 angegeben.

Durch die Becherform des äußeren Dämpferteiles wird erreicht, daß das viskose Medium auch bei sehr langem Einsatz bei hohen Temperaturen unter Schwerkrafteinwirkung nicht aus der Dämpfungseinrichtung austreten kann.

Bei einem Sicherheitsventil gemäß Anspruch 2 sind bei weiterhin kompakten Außenabmessungen die Dämpfungszahlen deutlich erhöht, da man nun eine Vielzahl von Paaren zusammenarbeitender Wirkflächen hat.

Mit der Weiterbildung der Erfindung gemäß Anspruch 3 läßt sich das Ausmaß der Dämpfung in Abhängigkeit vom von der Ventilspindel aus der Ruhelage heraus zurückgelegten Weg modifizieren.

Bei einer Dämpfungseinrichtung, die ein becherförmiges äußeres Dämpferteil aufweist, wird bei einem Schnellöffnungsventil das innere Dämpferteil gegen den Boden des äußeren Dämpferteiles bewegt; ein entsprechendes Volumen an viskosem Medium muß über die zwischen den Wirkflächen liegende Spalte abströmen. Hierdurch wird eine zusätzliche Dämpfungswirkung durch Drosselung erhalten. Wo ein solcher zusätzlicher Dämpfungseffekt nicht gewünscht wird, kann man das in der Ruhestellung des Sicherheitsventiles unter der Unterkante des inneren Dämpferteiles liegende Volumen des äußeren Dämpferteiles gemäß Anspruch 4 als Totraum ausbilden. Der dichte, elastisch komprimierbare Totraumkörper gestattet die Relativbewegung zwischen dem inneren Dämpferteil und dem äußeren Dämpferteil, verhindert jedoch ein Eintreten von viskosem Medium in den unteren Abschnitt des becherförmigen Dämpferteiles. Die Federkonstante des Materiales, aus welchem der Totraumkörper gefertigt ist, braucht nicht groß zu sein, da beim Auseinanderfahren der Dämpferteile der Totraumkörper zwangsweise wieder expandiert wird. Falls gewünscht, kann man aber auch Totraumkörper mit etwas größerer Federkonstanten verwenden, um so eine zusätzliche Dämpfungsfeder zu erhalten.

Totraumkörper gemäß Anspruch 5 lassen sich sehr einfach herstellen und einbauen.

Verwendet man als Totraumkörper eine Schüttung aus komprimierbarem Granulat, wie im Anspruch 6 angegeben, so kann man Totraumkörper unterschiedlichster Abmessungen und Geometrie ohne Herstellung entsprechender Schäumformen auch in kleinen Serien preisgünstig herstellen.

Auch mit der Weiterbildung der Erfindung gemäß Anspruch 7 wird erreicht, daß bei der Relativbewegung der Dämpferteile verdrängtes viskoses Medium keinen zusätzlichen Drosseleffekt erzeugt, wobei zugleich gewährleistet ist, daß dieses über Überströmnuten abgeführte Medium nicht aus der Dämpfungseinrichtung austreten kann.

Das Sicherheitsventil gemäß Anspruch 8 hat wegen der direkten Verbindung zwischen Ventilspindel und äußerem Dämpferteil besonders einfachen mechanischen Aufbau.

Wählt man die Wirkflächen bemäß Anspruch 20 groß, so hat man einerseits sehr große Oberflächen zur Aufnahme der Dissipationswärme. Darüber hinaus hat eine Dämpfungseinrichtung mit großen Wirkflächen auch eine geringe Eigenelastizität, so daß man eine sehr direkt einsetzende Dämpfung erhält.

Auf Grund der Einstellbarkeit der Ausgangs-Ruhelage der Dämpferteile lassen sich auch die Dämpfungseigenschaften unter Berücksichtigung der Längen der einlaßseitig und auslaßseitig an das Sicherheitsventil angeschlossenen Leitungsabschnitte noch am Einsatzort einfach einstellen.

Nachstehend wird die Erfindung anhand von Ausführungsbeispielen unter Bezugnahme auf die Zeichnung näher erläutert.

In dieser zeigen:

Figur 1:
einen axialen Schnitt durch ein federbelastetes Sicherheitsventil mit integrierter Dämpfungseinrichtung;

Figuren 2 und 3:
axiale Teilschnitte durch abgewandelte federbelastete Sicherheitsventile mit integrierter Dämpfungseinrichtung;

Figuren 4 und 5:
zwei Ausführungsbeispiele für Dämpfungseinrichtungen für ein federbelastetes Sicherheitsventil mit wegabhängiger Dämpfung;

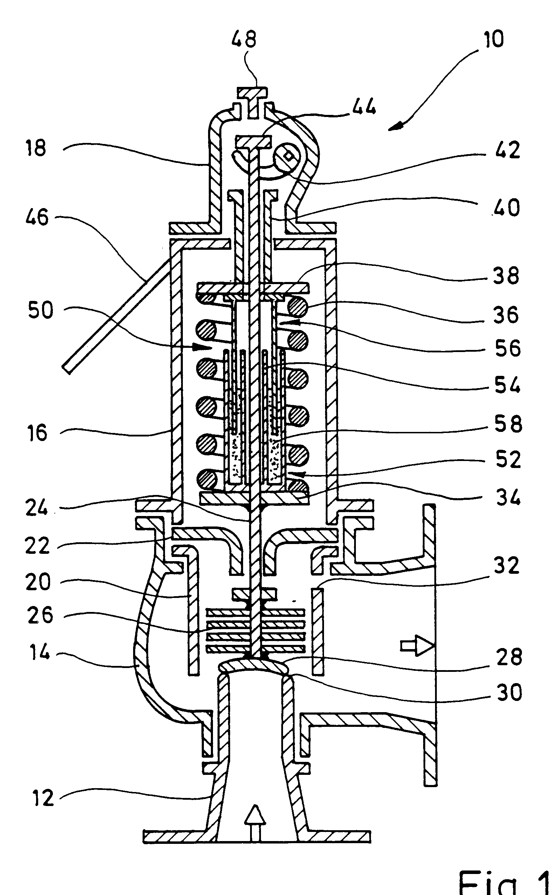

Figur 6:
eine ähnliche axiale Schnittansicht wie Figur 1, in welcher ein federbelastetes Sicherheitsventil mit angebauter Dämpfungseinrichtung gezeigt ist; und

Figur 7:
einen vergrößerten axialen Schnitt durch eine abgewandelte anbaubare Dämpfungseinrichtung für ein federbelastetes Sicherheitsventil.

Figur 1 zeigt einen schematischen axialen Schnitt durch ein federbelastetes Sicherheitsventil 10 mit einem mehrteiligen Ventilgehäuse, zu welchem ein Einlaß-Gehäuseteil 12, ein Auslaß-Gehäuseteil 14, ein Federkammer-Gehäuseteil 16 sowie ein Deckel 18 gehören. Zwischen die Gehäuseteile 14, 16 sind ein Hubhilfezylinder 20 und eine Zwischenwand 22 dicht eingespannt.

Durch die Zwischenwand 22 ist eine Ventilspindel 24 dicht hindurchgeführt, die am unteren Ende einen Hubhilfekolben 26 sowie ein Verschlußstück 28 trägt. Letzteres arbeitet mit einem vom Einlaß-Gehäuseteil 12 getragenen Ventilsitz 30 zusammen.

Wie aus Figur 1 ersichtlich, steht der über dem Hubhilfekolben 26 liegende Arbeitsraum des Hubhilfezylinders 20 über eine Öffnung 32 ständig mit dem Ventilauslaß in Verbindung.

In ihrem innerhalb des Gehäuseteiles 16 liegenden Abschnitt trägt die Ventilspindel 24 einen Federsitz 34, an welchem das untere Ende einer Schraubenfeder 36 angreift. Deren oberes Ende ist an einen Federsitz 38 abgestützt, der von einer die Ventilspindel 24 umgebenden Einstellhülse 40 getragen ist. Letztere trägt auf ihrer Außenseite ein Gewinde und ist in einem passenden Gewinde in der Deckenwand des Federkammer-Gehäuseteiles 16 verschraubbar.

Im Inneren des glockenförmig ausgebildeten Deckels 18 ist ein Öffnungsfinger 42 um eine zur Zeichenebene senkrechte Achse drehbar gelagert, der an einem vom Ende der Ventilspindel 24 getragenen Antriebskopf 44 der Ventilspindel angreifen kann. Der Öffnungsfinger 42 ist drehfest mit einem Betätigungshebel 46 verbunden. In den obersten Abschnitt des Deckels 18 ist eine Schraube 48 eingedreht. Diese kann durch eine längere Spezialschraube ersetzt werden, die zum zwangsweisen Verriegeln des Verschlußstückes 28 in der Schließstellung dient.

Im Inneren der Schraubenfeder 36 ist eine insgesamt mit 50 bezeichnete Dämpfungseinrichtung vorgesehen, welche hochfrequente Schwigungen der beweglichen Ventilteile beim schnellen Öffnen und Schließen des Sicherheitsventiles unterbindet, die typischerweise im Frequenzbereich von 100 Hz bis einigen kHz liegen.

Zur Dämpfungseinrichtung 50 gehört ein becherförmiges äußeres Dämpferteil 52, welches fest mit dem unteren Federsitz 34 der Schraubenfeder 36 verbunden ist. Vom Boden des Dämpferteiles 52 erstreckt sich eine Rohrwand 54 koaxial zur Spindelachse nach oben, und in den zwischen der Rohrwand 54 und der Umfangswand des Dämpferteiles 52 gebildeten Ringraum greift ein inneres Dämpferteil 56 unter beidseitigem radialem Spiel ein. Das innere Dämpferteil 56 hängt vom oberen Federsitz 38 nach unten und ist fest hiermit verbunden.

Der durch das äußere Dämpferteil 52 vorgegebene Ringraum ist mit einem hochviskosen Silikonfett 58 gefüllt, welches als Füllstoffkomponente oder ausschließlichen Füllstoff Graphit enthält. Der Pegel des Silikonfettes 58 reicht über die Unterkante des zylindrischen inneren Dämpferteiles 56. Wie Figur 1 zeigt, endet die Unterkante des inneren Dämpferteiles 56 um eine Strecke über dem Boden des äußeren Dämpferteiles 52, die deutlich größer ist als der Arbeitshub des Sicherheitsventiles 10, welcher durch Anschlagen des Hubhilfekolbens 26 an einem herabgezogenen mittigen Rohrabschnitt der Zwischenwand 22 vorgegeben ist.

Die Innenfläche der Umfangswand des äußeren Dämpferteiles 52 und die Außenfläche des zylindrischen inneren Dämpferteiles 56 sowie die Innenfläche des inneren Dämpferteiles 56 und die Außenfläche der Rohrwand 54 bilden zusammen zwei Paare von Wirkflächen, zwischen denen sich jeweils eine dünne Schicht des Silikonfettes 58 befindet. Die Dicke dieser Schicht ist in der Zeichnung übertrieben groß wiedergegeben; in der Praxis beträgt die Schichtdicke etwa 0,1 bis etwa 1 mm.

Bei unveränderter Geometrie der beiden Dämpferteile 52, 56 kann man das Dämpfungsverhalten der Dämpfungseinrichtung 50 über die Art und Viskosität des in den Ringraum des äußeren Dämpferteiles 52 eingefüllten viskosen Mediums ebenso steuern wie über die Einfüllhöhe dieses Mediums. Darüber hinaus kann man die Dämpfungseinrichtungen über die Dicke der zwischen den Wirkflächen der Dämpferteile 52, 56 liegenden Spalte beeinflussen.

Bei dem in Figur 1 gezeigten Sicherheitsventil nimmt die Stärke der Dämpfung mit dem Öffnungsweg des Verschlußstückes 28 zu, da ein zunehmend größerer Abschnitt des inneren Dämpferteiles 56 in das Silikonfett 58 eintaucht, wodurch sich die Größe der auf Scherung belasteten Fettschicht entsprechend erhöht. Die prozentuale Zunahme der Dämpfung hängt offensichtlich wieder von der Einfüllhöhe des Silikonfettes 58 ab. Wäre das Silikonfett 58 z.B. nur bis knapp über die Unterkante des Dämpferteiles 56 eingefüllt, wenn das Sicherheitsventil 10 in der in Figur 1 gezeigten Schließstellung steht, so hätte man eine sehr starke prozentuale Zunahme der Dämpfung; bei den in Figur 1 dargestellten Verhältnissen nimmt die Dämpfung nur um weniger als 20 % von der Schließstellung des Ventiles zur vollen Offenstellung hin zu.

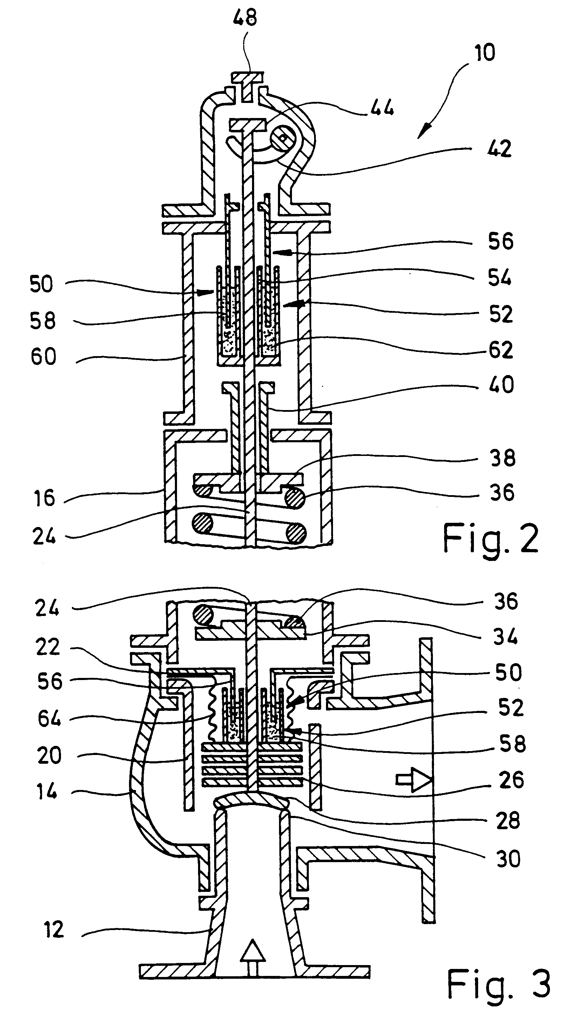

Bei dem in Figur 2 wiedergegebenen abgewandelten Sicherheitsventil ist die Dämpfungseinrichtung an das Ende der Federkammer angesetzt. Diese Ausführungsform eignet sich somit besonders gut zur Nachrüstung einer Dämpfungseinrichtung an einem schon im Einsatz befindlichen federbelasteten Sicherheitsventil. An das Federkammer-Gehäuseteil 16 ist ein Dämpfungs-Gehäuseteil 60 angebaut, welches dann den Deckel 18 trägt. Das becherförmige äußere Dämpferteil 52 ist an dem unter dem Antriebskopf 44 liegenden Abschnitt der Ventilspindel 24 befestigt, und das zylindrische innere Dämpferteil 56 ist über eine nicht näher gezeigte Gewindeverbindung axial verstellbar in der oberen Stirnwand des Dämpfungs-Gehäuseteiles 60 axial einstellbar angebracht.

Bei der in Figur 2 gezeigten Dämpfungseinrichtung 50 ist ferner in den untersten Abschnitt des durch das äußere becherförmige Dämpferteil 52 begrenzten Ringraumes ein Totraumkörper 62 eingesetzt, der aus einem geschlossenporigen geschäumten elastischen Kunststoffmaterial besteht. Der Totraumkörper 62 reicht in der Schließstellung des Sicherheitsventiles bis zur Unterkante des inneren Dämpferteiles 56 und verhindert, daß sich der unter der Unterkante des inneren Dämpferteiles 56 liegende Raum mit Silikonfett 58 füllt. Der Totraumkörper 62 läßt dagegen die Relativbewegung zwischen der Unterkante des Dämpferteiles 56 und dem Boden des Dämpferteiles 52 praktisch ohne Behinderung zu, wenn ein weiches Schaumstoffmaterial für den Totraumkörper 62 verwendet wird. Bei der Dämpfungseinrichtung nach Figur 2 hat man somit eine vom Spindelweg unabhängige Größe der auf Scherung beanspruchten Schichten aus Silikonfett 58.

Das Ausführungsbeispiel nach Figur 3 unterscheidet sich von den schon erläuterten Ausführungsbeispielen dadurch, daß die Dämpfungseinrichtung 50 in unmittelbarer Nähe des Hubhilfekolbens 26 angeordnet ist. Zur Abdichtung der Dämpfungseinrichtung 50 gegen das zu steuernde Medium ist ein Balg 64 vorgesehen, der das äußere Dämpferteil 52 dicht umgibt und zusammen mit der das innere Dämpferteil 56 tragenden Zwischenwand 22 mit den Gehäuseteilen 14 und 16 dicht verspannt ist.

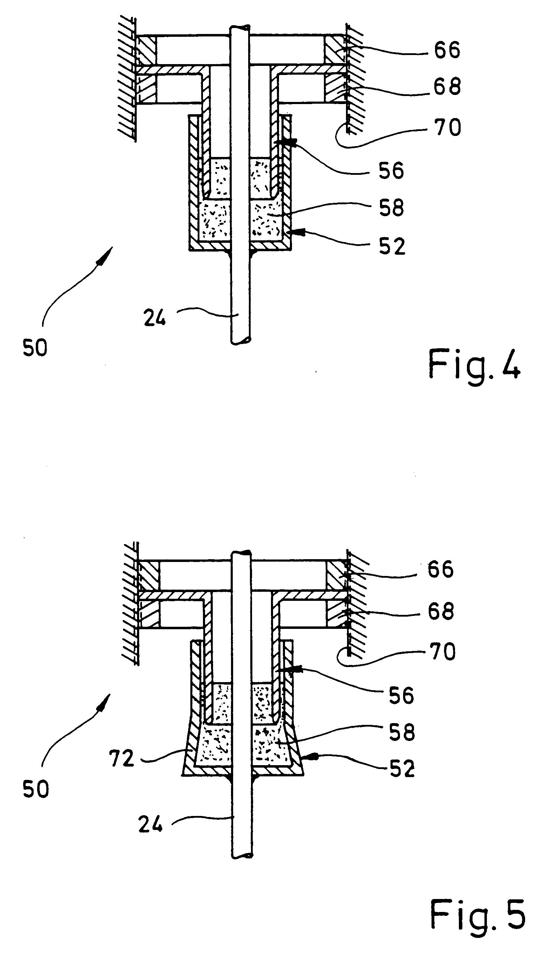

Bei der in Figur 4 gezeigten abgewandelten Dämpfungseinrichtung 50 hat das zylindrische innere Dämpferteil 56 geringen Abstand von der Umfangswand des äußeren Dämpferteiles 52 und großen Abstand von der Außenfläche der Ventilspindel 24. Beim Öffnen des Sicherheitsventiles aus dem unteren Abschnitt des becherförmigen äußeren Dämpferteiles 52 zu verdrängendes Silikonfett 58 kann somit über einen großen Querschnitt nach oben ausweichen, so daß die Dämpfungswirkung praktisch ausschließlich auf der Scherung der dünnen Fettschicht beruht, die zwischen der Außenfläche des inneren Dämpferteiles 56 und der Innenfläche des äußeren Dämpferteiles 52 eingeschlossen ist.

Das innere Dämpferteil 56 ist durch Gewinderinge 66, 68 axial positioniert, die in einer Gewindebohrung 70 des Ventilgehäuses verstellbar sind, um den Anfangswert der Dämpfung ohne Änderung der Masse eingefüllten Silikonfettes 58 einstellen zu können.

Die in Figur 5 gezeigte Dämpfungseinrichtung ist sehr ähnlich zu derjenigen nach Figur 4, nur erweitert sich das äußere Dämpferteil 52 zu seinem Boden hin kegelförmig, wie bei 72 gezeigt. Beim Eintreten des inneren Dämpferteiles 56 in den unteren Abschnitt 72 des äußeren Dämpferteiles 52 hat man somit lokal eine zunehmend größere Dicke der Schicht aus Silikonfett 58, und diese Schichtabschnitte tragen somit prozentual entsprechend weniger zur Dämpfung bei. Damit ist die wegabhängige Zunahme der Dämpfung, wie sie bei der Dämpfungseinrichtung nach Figur 4 erhalten wird, vermindert.

Eine Änderung der Eintauchtiefe des Dämpferteiles 56 im Silikonfett 58 erhält man wie nach Figur 4. Dabei kann diese Änderung der Eintauchtiefe positiv oder negativ sein, je nachdem ob das Gewinde der Ringe gleichen Drehsinn aufweist wie dasjenige der Gewindebohrung 70 oder entgegengesetzen Drehsinn. Das Ausmaß des wegabhängigen Anteiles der Dämpfung läßt sich über die Steigung des Gewindes und der Gewindebohrung einstellen.

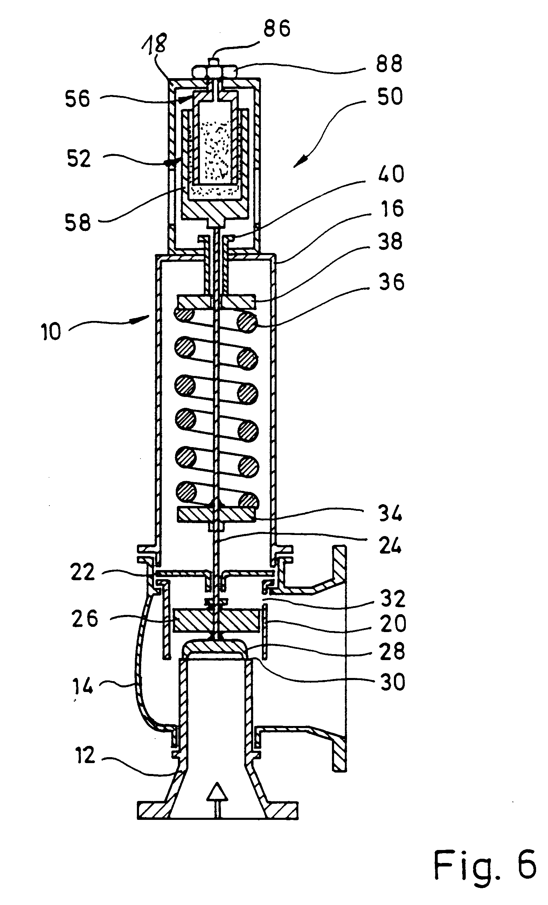

Auch bei dem in Figur 6 gezeigten Sicherheitsventil sind Bauteile, die obenstehend unter Bezugnahme auf die Figuren 1 bis 3 schon in funktionsanaloger Form erläutert wurden, wieder mit denselben Bezugszeichen versehen. Diese Ventilteile werden nachstehend nicht noch einmal im einzelnen beschrieben.

Bei dem in Figur 6 gezeigten Sicherheitsventil ist das becherförmige äußere Dämpferteil 52 auf das obere Ende der Ventilspindel 24 aufgeschraubt. Das innere Dämpferteil 56 greift wieder von oben in das Dämpferteil 52 ein und trägt an seinem Boden einen Gewindebolzen 86, der durch die obere Endwand eines laternenförmig ausgebildeten Deckels 18 hindurchgeschraubt ist und in der jeweils gewünschten Axialstellung durch eine Mutter 88 arretiert werden kann.

Die in Figur 6 gezeigte Anordnung der Dämpfungseinrichtung beim Ende der Ventilspindel 24 ist insbesondere für die Nachrüstung bei schon im Einsatz befindlichen Sicherheitsventilen von Vorteil. Auch die Wartung der Dämpfungseinrichtung und die Einstellung ihrer Dämpfungseigenschaften kann besonders leicht noch am Einsatzort durchgeführt werden.

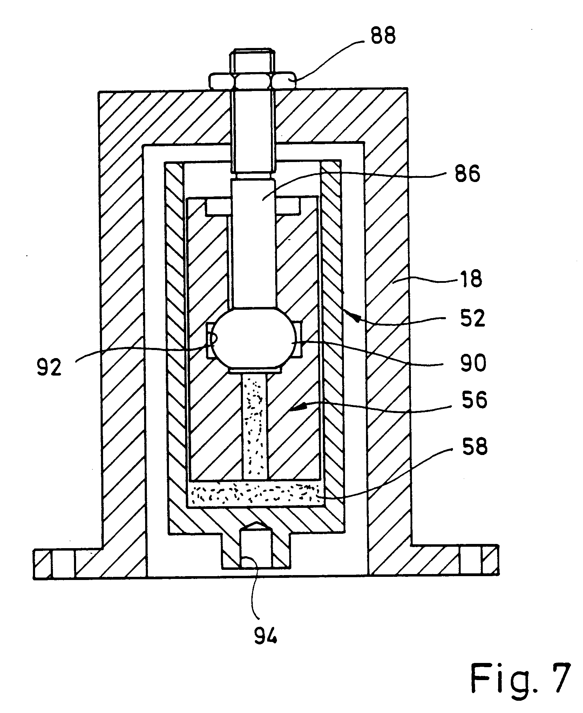

Insbesondere bei angebauten Dämpfungseinrichtungen, die zusammen mit schon installierten Sicherheitsventilen verwendet werden sollen, ist es schwierig, eine vollständige Parallelität zwischen Dämpferachse und Achse der Ventilspindel 24 zu gewährleisten. Figur 7 zeigt eine anbaubare Dämpfungseinrichtung, welche einen Ausgleich für Fluchtungsfehler zwischen Dämpferachse und Ventilspindelachse ermöglicht. Die verschiedenen Dämpferteile sind wieder mit den schon oben verwendeten Bezugszeichen versehen.

Die Abstützung des inneren Dämpferteiles 56 am Deckel 18 des Ventilgehäuses erfolgt nicht mehr über einen fest mit dem Dämpferteil 56 verbundenen Gewindebolzen 86; vielmehr hat der Gewindebolzen 86 an seinem unteren Ende eine angeformte Kugel 90, welche in eine Ringnut 92 des Dämpferteiles 56 eingreift. Die Ringnut 92 und die Kugel 90 bilden zusammen ein Kugelgelenk. Letzteres erlaubt dem Dämpferteil 56 sich neigungsmäßig auf die Achse des äußeren Dämpferteiles 52 auszurichten. In der Praxis kann beim Ausführungsbeispiel nach Figur 7 das innere Dämpferteil 56 aus zwei Segmenten bestehen, wobei die transversale Trennfläche durch die Ringnut 92 verläuft, um den Zusammenbau des die Kugel 90 tragenden Gewindebolzen 86 mit dem inneren Dämpferteil 56 zu ermöglichen.

Der Deckel 18 kann anstelle eines üblichen Deckels an einem schon im Einsatz befindlichen Sicherheitsventil angebracht werden, bei welchem im übrigen dann nur noch am freien Ende der Ventilspindel 24 ein Gewinde angebracht werden kann, auf welches ein Anschlußgewinde 94 des äußeren Dämpferteiles 52 dann aufgeschraubt wird.

Wie aus der obigen Beschreibung von Ausführungsbeispielen ohne weiteres ersichtlich, arbeiten die verschiedenen Dämpfungseinrichtungen 50 vollständig ohne Haftreibung. Man hat somit auch für kleine Schwingungsamplituden eine wirksame Dämpfung, wobei die Dämpfung je nach Ausbildung der Dämpfungseinrichtung gar nicht, schwach oder stärker vom Öffnungsweg des Ventiles abhängen kann. Für alle Ausführungsbeispiele gilt, daß die Dämpfung geschwindigkeitsabhängig erfolgt.

**Patentansprüche**

1. Federbelastetes Sicherheitsventil mit einem Gehäuse (12 bis 16), in welchem zwischen Einlaß (12) und Auslaß (14) ein Ventilsitz (30) vorgesehen ist, mit einem Verschlußstück (28), welches mit dem Ventilsitz (30) zusammenarbeitet, mit einer das Verschlußstück (28) tragenden Spindel (24), mit einer auf die Spindel (24) arbeitenden Federanordnung (36) und mit einer mit der Spindel (24) gekoppelten, viskoses Medium (58) enthaltenden Dämpfungseinrichtung (50), dadurch gekennzeichnet, daß die Dämpfungseinrichtung (50) ein becherförmiges feststehendes äußeres Dämpferteil (52) und ein hierzu koaxiales mit der Spindel (24) verbundenes bewegliches inneres Dämpferteil (56) aufweist; daß die Dämpferteile (52, 56) zwei einander unter geringem Abstand gegenüberliegende zylindrische Wirkflächen vorgeben und sich zwischen den Wirkflächen das viskose Medium (58) befindet; und daß die Ausgangsrelativstellung der Dämpferteile (52, 56), die in der Ruhestellung der Dämpfungseinrichtung (50) angetroffen wird, einstellbar ist.

2. Sicherheitsventil nach Anspruch 1, dadurch gekennzeichnet, daß die Dämpferteile (52, 56) eine Mehrzahl kammartig ineinandergreifender Wirkwände aufweisen, zwischen denen sich viskoses Medium (58) befindet.

3. Sicherheitsventil nach Anspruch 1 oder 2, dadurch gekennzeichnet, daß mindestens eines der Dämpferteile (52, 56) in Richtung der Relativbewegung konturiert ist, so daß sich die Breite mindestens eines der zwischen den Dämpferteilen (52, 56) vorgegebenen, mit viskosem Medium (58) gefüllten Spalte in Bewegungsrichtung ändert.

4. Sicherheitsventil nach einem der Ansprüche 1-3, dadurch gekennzeichnet, daß über dem Boden des becherförmigen äußeren Dämpferteiles (52) ein elastisch komprimierbarer dichter Totraumkörper (62) angeordnet ist, welcher vorzugsweise in der Ruhestellung der Dämpfungseinrichtung (50) bis zur Unterkante des inneren Dämpferteiles (56) reicht.

5. Sicherheitsventil nach Anspruch 4, dadurch gekennzeichnet, daß der Totraumkörper (62) ein geschlossenporiges elastisches Kunststoffschaumteil ist.

6. Sicherheitsventil nach Anspruch 4, dadurch gekennzeichnet, daß der Totraumkörper (62) durch eine Schüttung aus komprimierbarem Granulatmaterial gebildet ist.

7. Sicherheitsventil nach einem der Ansprüche 1-3, dadurch gekennzeichnet, daß in den Wirkflächen der Dämpferteile (52, 56) Überströmnuten vorgesehen sind und innerhalb und/oder außerhalb der Wirkflächen ein Auffangbehälter für bei der Relativbewegung zwischen den Dämpferteilen (52, 56) verdrängtes viskoses Medium angeordnet ist.

8. Sicherheitsventil nach einem der Ansprüche 1-7, dadurch gekennzeichnet, daß das becherförmige äußere Dämpferteil (52) mit der Spindel (24) zur gemeinsamen axialen Bewegung verbunden ist, während das innere Dämpferteil (56) am Gehäuse (12-18) festgelegt ist.

9. Sicherheitsventil nach einem der Ansprüche 1-8, dadurch gekennzeichnet, daß das viskose Medium ein Silikonfett ist.

10. Sicherheitsventil nach Anspruch 9, dadurch gekennzeichnet, daß das Füllmaterial des Silikonfettes zumindest teilweise, vorzugsweise vollständig aus Graphit besteht.

11. Sicherheitsventil nach einem der Ansprüche 1-10, dadurch gekennzeichnet, daß das viskose Medium seine Viskosität in einem großen Temperaturbereich, vorzugsweise über den Bereich von - 50° C bis 200° C, im wesentlichen nicht ändert.

12. Sicherheitsventil nach einem der Ansprüche 1-11, dadurch gekennzeichnet, daß der zwischen den Dämpferteilen (52, 56) liegende Spalt, in welchem sich das viskose Medium (58) befindet, eine Dicke von weniger als 1 mm, vorzugsweise eine Dicke von etwa 0,1 mm aufweist.

13. Sicherheitsventil nach einem der Ansprüche 1-12, dadurch gekennzeichnet, daß die Dämpfungseinrichtung (50) koaxial im Inneren der durch Schraubenfedern (36) gebildeten Federanordnung angeordnet ist.

14. Sicherheitsventil nach einem der Ansprüche 1-12, dadurch gekennzeichnet, daß die Dämpfungseinrichtung (50) als nachrüstbarer Ventilaufsatz ausgebildet ist.

15. Sicherheitsventil nach einem der Ansprüche 1-14, dadurch gekennzeichnet, daß die Dämpfungseinrichtung (50) über der Federanordnung (36) liegt.

16. Sicherheitsventil nach einem der Ansprüche 1-13, dadurch gekennzeichnet, daß die Dämpfungseinrichtung (50) einem dem Verschlußstück (28) benachbarten Abschnitt der Spindel (24) zugeordnet ist.

17. Sicherheitsventil nach einem der Ansprüche 1-16, dadurch gekennzeichnet, daß die Dämpfungseinrichtung (50) im Ringraum zwischen der Innenfläche des Ventilgehäuses (12-18) und der Außenfläche der Ventilspindel (24) oder auf der Außenfläche des Ventilgehäuses (1218) angeordnet ist.

18. Sicherheitsventil nach einem der Ansprüche 1-17, dadurch gekennzeichnet, daß eines der gegeneinander bewegbaren Dämpferteile (52, 56) von einem Kugelgelenk (86, 88) getragen ist.

19. Sicherheitsventil nach einem der Ansprüche 1-18, dadurch gekennzeichnet, daß die Wirkwände große axiale Abmessungen haben und zugleich eine Führung für die Ventilspindel (24) bilden.

20. Sicherheitsventil nach einem der Ansprüche 1-19, dadurch gekennzeichnet, daß die Wirkflächen groß sind.

**Claims**

1. Spring-loaded safety valve with a housing (12 to 16), in which between the inlet (12) and outlet (14) a valve seat (30) is provided, with a closure member (28), which cooperates with the valve seat (30), with a spindle (24) supporting the closure member (28), with a spring arrangement (36) acting on the spindle (24) and with a damping device (50) connected to the spindle (24) and containing a viscous medium (58), characterised in that the damping device (50) comprises a cup-shaped, stationary outer damper part (52) and a movable, inner damper part (56) coaxial therewith and connected to the spindle (24); that the damper parts (52,56) define two cylindrical active surfaces located opposite each other at a slight distance apart and the viscous medium (58) is located between the active surfaces; and that the initial relative position of the damper parts (52,56), which is encountered in the inoperative position of the damping device (50), is adjustable.

2. Safety valve according to Claim 1, characterised in that the damper parts (52,56) comprise a plurality of active walls engaging one in the other in the manner of a comb, between which the viscous medium (58) is located.

3. Safety valve according to Claim 1 or 2, characterised in that at least one of the damper parts (52,56) is contoured in the direction of the relative movement, so that the width of at least one of the gaps defined between the damper parts (52,56) and filled with viscous medium (58), varies in the direction of movement.

4. Safety valve according to one of Claims 1 to 3, characterised in that located above the base of the cup-shaped outer damper part (52) is an elastically compressible, liquid-tight clearance space member (62), which in the inoperative position of the damping device (50) preferably extends as far as the lower edge of the inner damper part (56).

5. Safety valve according to Claim 4, characterised in that the clearance space member (62) is an elastic synthetic foam part having closed pores.

6. Safety valve according to Claim 4, characterised in that the clearance space member (62) is formed by a filling of compressible granulated material.

7. Safety valve according to one of Claims 1 to 3, characterised in that overflow grooves are provided in the active surfaces of the damper parts (52,56) and inside and/or outside the active surfaces a collecting container is disposed for viscous medium displaced at the time of relative movement between the damper parts (52,56).

8. Safety valve according to one of Claims 1 to 7, characterised in that the cup-shaped outer damper part (52) is connected to the spindle (24) for mutual axial movement, whereas the inner damper part (56) is fixed to the housing (12-18).

9. Safety valve according to one of Claims 1 to 8, characterised in that the viscous medium is a silicone grease.

10. Safety valve according to Claim 9, characterised in that the filling material of the silicone grease consists at least partly, preferably completely of graphite.

11. Safety valve according to one of Claims 1 to 10, characterised in that the viscosity of the viscous medium does not change substantially over a large temperature range, preferably over the range of -50°C to 200°C.

12. Safety valve according to one of Claims 1 to 11, characterised in that the gap located between the damper parts (52,56), in which the viscous medium (58) is located, has a thickness of less than 1 mm, preferably a thickness of approximately 0.1 mm.

13. Safety valve according to one of Claims 1 to 12, characterised in that the damping device (50) is arranged coaxially inside the spring arrangement formed by helical springs (36).

14. Safety valve according to one of Claims 1 to 12, characterised in that the damping device (50) is constructed as a supplementary valve attachment.

15. Safety valve according to one of Claims 1 to 14, characterised in that the damping device (50) is located above the spring arrangement (36).

16. Safety valve according to one of Claims 1 to 13, characterised in that the damping device (50) is associated with a section of the spindle (24) adjacent the closure member (28).

17. Safety valve according to one of Claims 1 to 16, characterised in that the damping device (50) is located in the annular space between the inner surface of the valve housing (12-18) and the outer surface of the valve spindle (24) or on the outer surface of the valve housing (12-18).

18. Safety valve according to one of Claims 1 to 17, characterised in that one of the damper parts (52,56) able to move with respect to each other is supported by a ball and socket joint (86,88).

19. Safety valve according to one of Claims 1 to 18, characterised in that the active walls have large axial dimensions and at the same time form a guide for the valve spindle (24).

20. Safety valve according to one of Claims 1 to 19, characterised in that the active surfaces are large.

**Revendications**

1. Soupape de sécurité sollicitée par des ressorts avec un corps (12 à 16) dans lequel est prévu un siège de soupape (30) entre l'entrée (12) et la sortie (14), avec une pièce de fermeture (28) qui coopère avec le siège de soupape (30), avec une tige (24) supportant la pièce de fermeture (28), avec un dispositif à ressort (36) agissant sur la tige (24) et avec un dispositif d'amortissement (50) contenant un fluide visqueux (58) et assemblé à la tige (24), caractérisée en ce que le dispositif d'amortissement (50) comporte une pièce d'amortisseur extérieure (52) fixe et en forme de cuvette et une pièce d'amortisseur intérieure (56) montée coaxialement par rapport à la tige (24) et assemblée à celle-ci avec possibilité de déplacement, en ce que les pièces d'amortisseur (52, 56) présentent deux surfaces de travail cylindriques opposées situées à faible distance l'une de l'autre et que le fluide visqueux (58) se trouve entre les surfaces de travail et en ce que la position relative initiale des pièces d'amortisseur (52, 56) qui se présente en position d'arrêt du dispositif d'amortissement (50) peut être réglée.

2. Soupape de sécurité selon la revendication 1, caractérisée en ce que les pièces d'amortisseur (52, 56) présentent plusieurs parois de travail engrenant les unes avec les autres à la manière d'un peigne et entre lesquelles se trouve le fluide visqueux (58).

3. Soupape de sécurité selon la revendication 1 ou 2, caractérisée en ce qu'au moins l'une des pièces d'amortisseur (52, 56) présente un profil en direction du déplacement relatif tel que la largeur d'au moins un jeu entre les pièces d'amortisseur (52, 56) et rempli de fluide visqueux (58) se modifie dans la direction de déplacement.

4. Soupape de sécurité selon l'une des revendications 1 à 3, caractérisée en ce qu'un corps d'espace mort (62) pouvant être comprimé élastiquement pour le rendre plus dense est disposé au-dessus du fond de la pièce d'amortisseur extérieure (52) en forme de cuvette, ce corps s'étendant de préférence en position d'arrêt du dispositif d'amortissement (50) jusqu'au bord inférieur de la pièce d'amortisseur intérieure (56).

5. Soupape de sécurité selon la revendication 4, caractérisée en ce que le corps d'espace mort (62) est une pièce de mousse de plastique élastique à pores fermés.

**6.** Soupape de sécurité selon la revendication 4, caractérisée en ce que le corps d'espace mort (62) est constitué par un granulé déversé en vrac et compressible.

**7.** Soupape de sécurité selon l'une des revendications 1 à 3, caractérisée en ce que des rainures de déversement sont prévues dans les surfaces de travail des pièces d'amortisseur (52, 56) et qu'un récipient de collecte est disposé à l'intérieur et/ou à l'extérieur des surfaces de travail pour recevoir le fluide visqueux déplacé au cours du mouvement relatif entre les pièces d'amortisseur (52, 56).

**8.** Soupape de sécurité selon l'une des revendications 1 à 7, caractérisée en ce que la pièce d'amortissement extérieure (52) en forme de cuvette est assemblée à la tige (24) pour permettre uniquement un déplacement axial commun, tandis que la pièce d'amortissement intérieure (56) est fixée au corps (12, 18).

**9.** Soupape de sécurité selon l'une des revendications 1 à 8, caractérisée en ce que le fluide visqueux est une graisse de silicone.

**10.** Soupape de sécurité selon l'une des revendications 1 à 9, caractérisée en ce que la matière de charge de la graisse de silicone est constituée, au moins partiellement et de préférence complètement, de graphite.

**11.** Soupape de sécurité selon l'une des revendications 1 à 10, caractérisée en ce que le fluide visqueux ne subit pas de modification notable de sa viscosité dans une large gamme de températures, et de préférence dans la gamme de -50°C à 200°C.

**12.** Soupape de sécurité selon l'une des revendications 1 à 11, caractérisée en ce que le jeu existant entre les pièces d'amortisseur (52, 56) et dans lequel se trouve un fluide visqueux (58) présente une épaisseur de moins de 1 mm et de préférence une épaisseur d'environ 0,1 mm.

**13.** Soupape de sécurité selon l'une des revendications 1 à 12, caractérisée en ce que le dispositif d'amortissement (50) est monté coaxialement à l'intérieur du dispositif à ressort constitué par les ressorts hélicoïdaux (36).

**14.** Soupape de sécurité selon l'une des revendications 1 à 12, caractérisée en ce que le dispositif d'amortissement (50) se présente sous forme d'un élément complémentaire à monter ultérieurement sur la soupape.

**15.** Soupape de sécurité selon l'une des revendications 1 à 14, caractérisée en ce que le dispositif d'amortissement (50) est disposé au-dessus du dispositif à ressort (36).

**16.** Soupape de sécurité selon l'une des revendications 1 à 13, caractérisée en ce que le dispositif d'amortissement (50) correspond à une section de la tige (24) proche de la pièce de fermeture (28).

**17.** Soupape de sécurité selon l'une des revendications 1 à 16, caractérisée en ce que le dispositif d'amortissement (50) est disposé dans l'espace annulaire entre la surface intérieure du corps de soupape (12, 18) et la surface extérieure de la tige de soupape (24) ou sur la surface extérieure du corps de soupape (12, 18).

**18.** Soupape de sécurité selon l'une des revendications 1 à 17, caractérisée en ce que l'une des deux pièces d'amortisseur (52, 56) pouvant se déplacer l'une par rapport à l'autre est supportée par une articulation à bille (86, 88).

**19.** Soupape de sécurité selon l'une des revendications 1 à 18, caractérisée en ce que les parois de travail ont de grandes dimensions axiales qui constituent également un guidage pour la tige de soupape (24).

**20.** Soupape de sécurité selon l'une des revendications 1 à 19, caractérisée en ce que les surfaces de travail sont grandes.

Fig. 1

Fig. 2

Fig. 3

Fig. 4

Fig. 5

Fig. 6

Fig. 7